(19) **Europäisches Patentamt**
**European Patent Office**
**Office européen des brevets**

(11) **EP 4 770 132 A1**

(12) **EUROPEAN PATENT APPLICATION**

(43) Date of publication:
**01.07.2026 Bulletin 2026/27**

(51) International Patent Classification (IPC):
**H04R 25/00** (2006.01)    **G02C 11/06** (2006.01)

(21) Application number: **24425065.0**

(52) Cooperative Patent Classification (CPC):
**H04R 25/70; G02C 11/06;** H04R 25/405;
H04R 25/407; H04R 25/507; H04R 25/604

(22) Date of filing: **24.12.2024**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Luxottica S.r.l.**
**32021 Agordo (BL) (IT)**

(72) Inventors:
• **Ongarello, Tommaso**
  **35142 Padova (PD) (IT)**
• **Saporito, Salvatore**
  **20123 Milano (MI) (IT)**
• **Trojaniello, Diana**
  **20123 Milano (MI) (IT)**

(74) Representative: **Biallo, Dario et al**
**Barzanò & Zanardo S.p.A.**
**Via Borgonuovo, 10**
**20121 Milano (IT)**

(54) **METHOD FOR CALIBRATING A HEARING AID AND A SYSTEM FOR AUTOMATICALLY CALIBRATING A HEARING AID USING SUCH A METHOD**

(57)    Method (100) for calibrating a hearing aid (400) worn by a user, the method (100) being implemented by a processing and control unit (330) of a system (300) for calibrating the hearing aid (400), the method (100) comprising the steps: a) receiving (110) at least one acoustic stimulus; and for each one of the detected acoustic stimulus: b) determining (120) a first set of parameters of such a detected acoustic stimulus, c) receiving (130) at least one EEG response, d) determining (140) a second set of parameters of a respective EEG response, e) performing a first verifying step (150) wherein it is verified whether the first set of parameters and the second set of parameters satisfy or not at least one of predetermined first conditions, f) if the detected at least one EEG response is detected within a certain timeframe from a sound onset time and if the outcome of the first verifying step (150) is positive, storing (151) the detected acoustic stimulus in association with the detected at least one EEG response.

Fig. 4

EP 4 770 132 A1

**Description**

The present invention refers to a method for calibrating a hearing aid and a system for calibrating a hearing aid using such a method.

As known, hearing loss is a partial inability to hear that is manifested by a permanent or temporary lowering of hearing threshold. The hearing threshold is the sound level below which a person's ear is unable to detect any sound.

Hearing loss can be caused by a great variety of factors, including traumatic or infective diseases, genetic pathology, or ageing (the age progression in an individual).

Individuals that are affected by hearing loss are referred to as partial deaf individuals. These individuals have a diminished acuity to sounds.

In the present description the expression "partially deaf" refers to an individual who has a diminished acuity to hear certain frequency sound.

In order to restore the hearing ability, a partially deaf individual can use a hearing aid.

As known, the hearing aid is a device configured to amplify sounds.

In more detail, the hearing aid is adapted to amplify the environmental sounds that a partially deaf individual is unable to clearly recognize and detect in order to make them more audible and improve hearing.

Unfortunately, the hearing aid is unable to restore hearing in profund deafness individuals characterized by a total absence of sounds perception and detection.

Generally, the severity of hearing loss is discovered by an audiometry exam conducted in laboratory by a specialist such as for example a doctor in audiology. During the audiometry exam, the specialist plays sounds at different frequency and intensity and determines whether the person can hear them.

In order to determine the minimum intensity at a respective frequency, the specialist lowers the intensity till the individual is unable to hear it.

The data (minimum intensity related to the corresponding frequency) are registered in an audiogram.

The specialist categorizes the hearing loss comparing the intensity and frequency registered in the audiogram with known values, for example values known in literature or values obtained with statistical analysis in clinical trials.

After the hearing loss level has been accomplished, the specialist or a hearing instrument specialist proceeds to calibrate the hearing aid by modifying the amplification gain on the basis of the outcome of the audiometry exam.

The procedure of calibration is called "fitting" and ensures a proper configuration of the hearing aid on which the quality of sound amplification would be based on. Indeed, a proper configuration is required in order to achieve an amplification which is effective for the partially deaf individual.

However, it has to be considered that hearing threshold changes over time and is highly individual-dependent.

In this regard, a partially deaf individual must visit a specialist often in order to maintain a functional hearing aid. For example a progressive loss of ability to hear high frequencies occurs with aging, or with the worsening of a disease, or with the changing in the individual lifestyle.

Moreover, a partially deaf individual needs to change the amplification gain of the hearing aid depending on environmental noise conditions that can change frequently.

In this regard, the cost and time increase.

The object of the present invention is to overcome the above-mentioned drawbacks and in particular to devise a method for calibrating a hearing aid and a system for calibrating a hearing aid using such a method which can save time and money compared to the known art.

This and other objects according to the present invention are achieved by making a method for calibrating a hearing aid as set forth in claim 1, and a system for calibrating a hearing aid using such a method as set forth in claim 12.

Further characteristics of the method for calibrating a hearing aid and a system for calibrating a hearing aid using such a method are the objects of the dependent claims.

The characteristics and advantages of the method for calibrating a hearing aid and a system for calibrating a hearing aid using such a method according to the present invention will be more evident from the following exemplary though non-limiting description, referring to the attached schematic drawings in which:

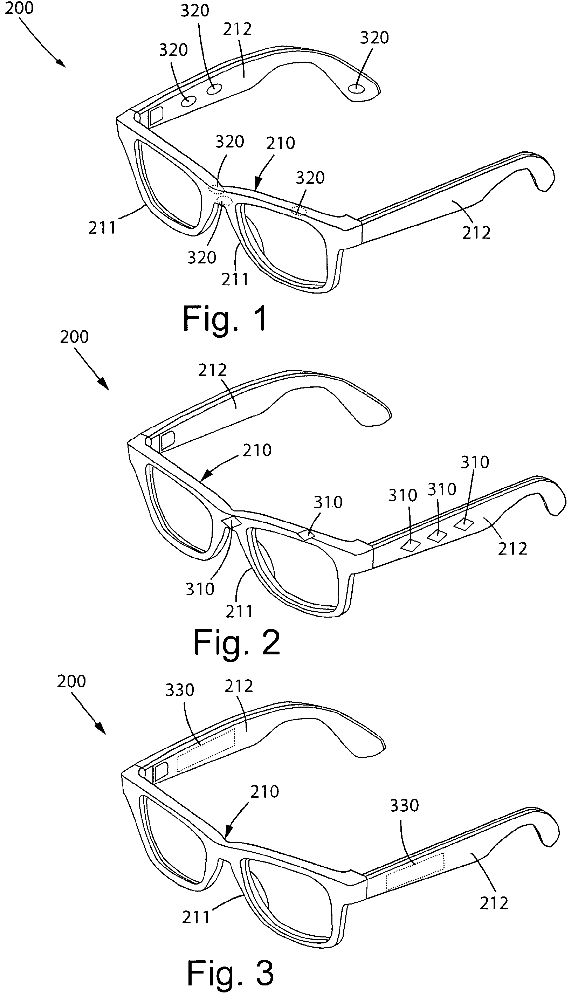

-   figure 1 is a perspective view of a system for calibrating a hearing aid according to the present invention associated to a head mountable device wherein the possible position of microphones of the system is shown;
-   figure 2 is a perspective view of a system for calibrating a hearing aid according to the present invention associated to a head mountable device wherein the possible position of electrodes for the system is shown;
-   figure 3 is a perspective view of a system for calibrating a hearing aid according to the present invention associated to a head mountable device wherein the possible position of a processing and control unit of the system is shown;

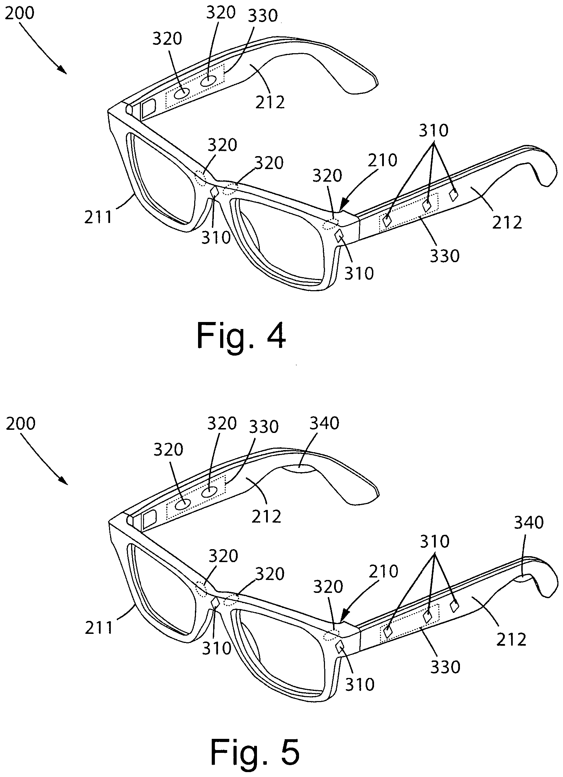

-   figure 4 is a perspective view of a system for calibrating a hearing aid according to the present invention associated to a head mountable device wherein the possible position of microphones, electrodes and the processing and control unit integrated in the same head mountable device is shown;

- figure 5 is a perspective view of a system for calibrating a hearing aid according to the present invention associated to a head mountable device wherein the possible position of microphones, electrodes, the processing and control unit and the speakers integrated in the same head mountable device is shown;

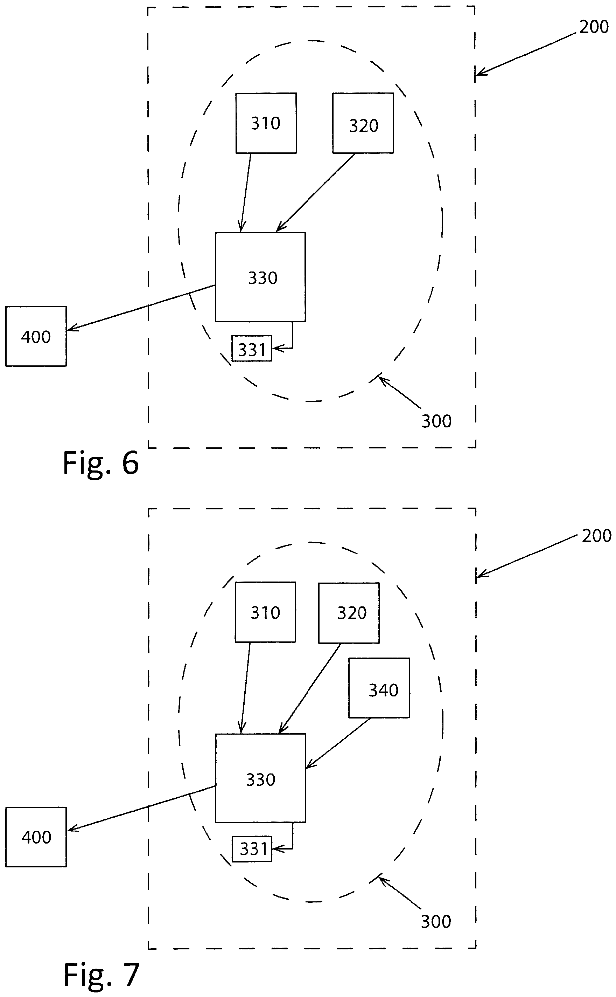

- figure 6 is a schematic view of a first embodiment of a system according to the present invention associated to a head mountable device ;
- figure 7 is a schematic view of a second embodiment of a system according to the present invention associated to a head mountable device ;

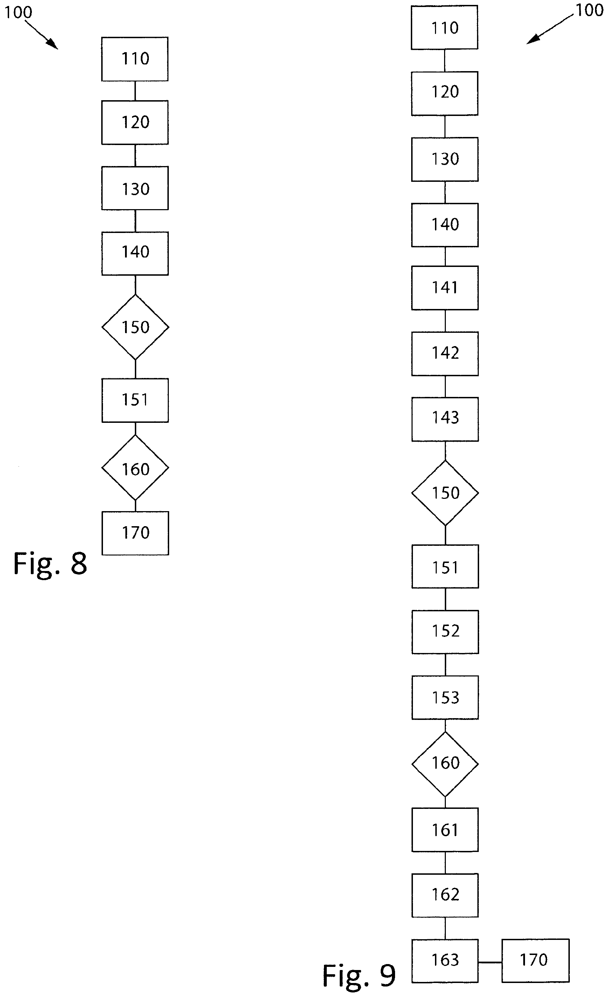

- figure 8 is a flow chart of an embodiment of a method for calibrating a hearing aid according to the present invention;
- figure 9 is a flow chart of a method for calibrating a hearing aid according to another embodiment of the present invention.

With reference to the figures, a system is shown, globally referred to as 300.

The system 300 is configured for calibrating a hearing aid 400.

In particular, the hearing aid 400 is configured to amplify sounds according to an amplification curve that links an amplification gain to an audible frequency range.

The system 300 may be associated to a head mountable device 200.

The head mountable device 200 is a device having a frame 210 configured to be mounted on a head of the user.

Preferably, the head mountable device 200 comprises also at least one lens.

For example, as shown in the figures, the head mountable device 200 is an eyewear comprising the frame 210 and at least one lens. The frame 210 comprises a front 211 adapted to carry the at least one lens and two temples 212 rotatably coupled to the front 211.

Alternatively, the system 300 may be associated to a head mounted hearing device as for example a earbud.

The system 300 comprises at least two microphones 310 intended to be arranged at a first predetermined distance to each other and configured for detecting at least one acoustic stimulus.

Preferably, the at least one acoustic stimulus comes from the outside of the frame 210, for example it is the environmental sound.

In the present description for the expression "acoustic stimulus" it is intended a sound wave in the audible frequency range from about 20 Hz to 20 kHz.

The system 300 comprises at least two pairs of electrodes 320 intended to be arranged at a second predetermined distance to each other and intended to be at least partially in contact with the user's head.

When the user wears the head mountable device 200, the least two pairs of electrodes 320 are in contact with the user's head.

The at least two pairs of electrodes 320 are configured for detecting at least one EEG response.

In particular, each pair of electrodes 320 comprises a first electrode configured to act as reference electrode and a second electrode configured to act as a measuring electrode.

In the present description for the expression "EEG response" it is intended the electroencephalographic response.

The system 300 comprises also a processing and control unit 330 in data communication with the at least two microphones 310 and the at least two pairs of electrodes 320.

For example the processing and control unit 330 is a microprocessor.

The processing and control unit 330 comprises a memory 331 for storing data.

Preferably, the processing and control unit 300 is embedded into/attached to the head mountable device 200, for example into/to the front 211 or into/to one of the two temple 212.

Alternatively, the processing and control unit 330 can be external to the head mountable device 200.

Preferably, the at least two microphones 310 can be partially embedded into the head mountable device 200, for example into the frame 210.

Preferably, the at least two microphones 310 can be attached to the head mountable device 200, for example attached to said frame 210.

Preferably, the at least two microphones 310 can be oriented in an arbitrary direction with respect to the frame 210.

Preferably, the at least two microphones 310 are monodirectional or omnidirectional.

Preferably, the microphones 320 can be more then two and can be grouped in arrays.

Preferably, the at least two microphones 310 are miniaturized, for example the at least two microphones 310 are piezo or MEMS based.

Preferably, the at least two pairs of electrodes 320 can be partially embedded into the head mountable device 200, for example into the frame 210.

Preferably, the at least two pairs of electrodes 320 can be attached to the head mountable device 200, for example attached to said frame 210.

Preferably, at least one pair of the at least two pairs of electrodes 320 is associated to at least one of the two temples 212.

Preferably, at least one pair of the at least two pairs of electrodes 320 is associated to the front 211.

Preferably, the system 300 comprises at least two speakers 340 intended to be arranged at a third predetermined distance to each other and adapted to generate the at least one acoustic stimulus. In this case, the processing and control unit 330 is in data communication with the at least two speakers 340.

Preferably, the at least two speakers 340 can be embedded into the head mountable device 200, for example into the frame 210.

Preferably, the at least two speakers 340 can be attached to the head mountable device 200, for example attached to said frame 210.

Preferably, the at least two speakers 340 can be oriented in an arbitrary direction with respect to the frame 210. Preferably, the at least two speakers 340 are monodirectional or omnidirectional.

Preferably, the speakers 340 can be more then two and can be grouped in arrays.

Preferably, the at least two speakers 340 are miniaturized, for example the at least two speakers 340 are piezo or MEMS based.

The system 300 comprises also a battery (not shown) associated to the head mountable device 200 (for example to the frame 210) configured for electrical power supplying the processing and control unit 300, the at least two microphones 310, the at least two pairs of electrodes 320 and the at least two speakers 340 if present.

Preferably, the battery can be rechargeable.

Preferably, the battery can be detached from the head mountable device 200, for example from the frame 210.

Preferably, the battery can be extractable from the head mountable device 200, for example from the frame 210.

The processing and control unit 330 is configured for implementing a method 100 for calibrating the hearing aid 400.

In particular, the method 100 can be implemented by means of a computer program or software loaded into the memory 331 of the processing and control unit 330.

Such a computer program thus comprises instructions that induce the processing and control unit 300 to implement the method 100 when the processing and control unit 330 runs the program.

The method 100 needs that the user wears the head mountable device 200 or the head mounted hearing device comprising the system 300, and the hearing aid 400.

The method 100 comprises the steps:

a) receiving 110 at least one acoustic stimulus detected by means of the at least two microphones 310;

and for each one of the detected acoustic stimulus:

b) determining 120 at least a first set of parameters of such a detected acoustic stimulus;
c) receiving 130 the at least one EEG response detected by means of the at least two pairs of electrodes 320 at least partially in contact with a user's head;
d) determining 140 at least a second set of parameters of a respective EEG response;
e) performing a first verifying step 150 wherein it is verified whether the first set of parameters of the detected acoustic stimulus and the second set of parameters of the detected at least one EEG response satisfy or not at least one of predetermined first conditions;
f) if the outcome of the first verifying step 150 is positive, storing 151 the detected acoustic stimulus in association with the detected at least one EEG response in the memory 331 of the processing and control unit 330.

Preferably, the method 300 comprises, after the step f), the steps:

g) for each one of the at least one EEG response associated with the detected acoustic stimulus, performing a second verifying step 160 wherein it is verified whether the first set of parameters of the detected acoustic stimulus and the second set of parameters of the detected at least one EEG response satisfy or not at least one of predetermined second conditions;
h) if the outcome of the second verifying step is negative determining 170 a modified amplification curve.

For example, the modified amplification curve may be determined on the basis of a gain to be applied based on minimum sound intensity.

In particular, the at least two microphones 310 detect the at least one acoustic stimulus and the processing and control unit 330 receives 110 the detected at least one acoustic stimulus.

In addition, the processing and control unit 330 determines 120 the first set of parameters of the detected at least one acoustic stimulus that has been received 110.

The first set of parameters comprises parameters with which the processing and control unit 330 can characterize and classify the at least one acoustic stimulus.

Preferably, the first set of parameters comprises one or more parameters among the direction of arrival of an acoustic stimulus, intensity of the acoustic stimulus detected by one respective microphone 310 at a first predetermined time, intensity differences of the acoustic stimulus detected by the at least two microphones 310 at the first predetermined time, sound onset time, power of the acoustic stimulus detected by one respective microphone 310 in a first predetermined frequency range, power of the cross-correlations of the acoustic stimulus detected by the at least two microphones 310 in the first predetermined frequency range.

For each microphone 310, the processing and control unit 330 can measure the direction of arrival of the detected acoustic stimulus.

In the present description for the expression "direction of arrival of a sound" is meant to indicate the angle between a first axis and a second axis, wherein the first axis is the direction of conjunction between the at least two microphones 310 and the second axis is the direction of conjunction between the acoustic sound stimulus and the respective microphone 310.

The direction of arrival can be estimated by means of known techniques, such as array signal processing, generalized cross correlation (GCC), multiple signal classification (MUSIC), time difference of arrival (TDOA), convolutional neural network (CNN).

For example, the direction of arrival can be expressed in relation to a change in the angle of direction with respect to one or more previously detected acoustic stimulus.

The intensity of the acoustic stimulus at a predetermined time can be estimated for example with the signal variance of the acoustic stimulus within the first predetermined time.

For example, the signal variance is computed as the difference between the normalized squared sum of instantaneous values with the mean value representing the deviation of the signal from its mean value.

For example, the intensity of the detected at least one acoustic stimulus can be expressed in relation to a previously detected intensity such as the environmental noise.

The intensity differences of the acoustic stimulus detected by the at least two microphones 310 at the first predetermined time can be estimated by the differences in signal variance within the first predetermined time. For example, the intensity difference can be the difference between the signal variance of one microphone 310 associated to one temple 312 and the signal variance of one microphone 310 associated to the opposite temple 312.

In the present description for the expression "a predetermined time" it is meant to indicate a time interval centered in the predetermined time and having a tolerance width.

Preferably the tolerance width is of about 200 ms. More preferably the tolerance width is of 100 ms.

Even more preferably the tolerance width is of 50 ms. The number of the possible intensity differences depends on the number of the microphones 310.

The number of intensity differences can be established by the following formula:

$$n! / (k! * (n-k)!)$$

wherein n is the number of microphones 310 and k is 2 since the intensity differences are calculated between two microphones 310.

For example, in the case in which the microphones 310 are in number equal to three, the number of intensity differences is three.

For example, in the case in which the microphones 310 are in number equal to four, the number of intensity differences is six.

The sound onset time is the time at which the at least two microphones 310 begin to detect the at least one acoustic stimulus.

The sound onset time can be the first timestamp at which the intensity detected by at least two microphones 310 is above a corresponding threshold.

The first predetermined frequency range can be uniform. For example, the first predetermined frequency range selected for estimating the power of the acoustic stimulus and the power of the cross-correlation of the acoustic stimulus for the respective microphones 310 can be substantially the same.

Once the user perceives a sound, a brain activity is triggered and the at least two pairs of electrodes 320 detect the at least one EEG response and send the detected at least one EEG response to the processing and control unit 330.

After the reception of such a detection, the processing and control unit 330 determines the second set of parameters.

The second set of parameters comprises parameters with which the processing and control unit 330 can characterize and classify the at least one EEG response. Preferably, the second set of parameters comprises one or more parameters among signal amplitude of the EEG response detected by one respective pair of electrode 320 for a second predetermined time interval subsequent to the sound onset time, power of the EEG response detected by one respective pair of electrode 320 in a second predetermined frequency range, power of the cross-correlations of the EEG responses detected by the at least two pairs of electrodes 320 in the second predetermined frequency range.

Preferably, the second predetermined time interval is from 0 to 500 ms subsequent the sound onset time.

Preferably, the second predetermined time interval is 300 ms subsequent the sound onset time.

Preferably, the second predetermined time interval is 120 ms subsequent the sound onset time.

Preferably, the second predetermined time interval is 30 ms subsequent the sound onset time.

The signal amplitude of each of the at least two pairs of electrodes 320 can be combined to each other by using known machine learning methods. In more detail, the signal measured by the at least two pairs of electrodes 320 can be used as the input of an Auditory Attention Decoding (AAD) algorithm, which can be achieved by machine learning models such as convolutional neural networks or by signal processing techniques such as Canonical Correlation Analysis (CCA) algorithm. The second predetermined frequency range can be uniform.

For example, the second predetermined frequency range selected for estimating the power of the EEG response and the power of the cross-correlation of the EEG response for the respective pair of electrodes 310 can be substantially the same.

Preferably, the first predetermined frequency range and the second predetermined frequency range are equal.

The values of the first parameters and the second parameters can be normalized with respect to predetermined baseline values or previously determined parameter values in relation to previously detected acoustic stimuli and EEG responses.

The baseline values are predetermined. For example the baseline values are values known in the state of art for that parameter, or are values obtained with statistical analysis in clinical trials.

If at least one predetermined first condition is satisfied which means that the outcome of the first verifying step 150 is positive, the at least one EEG response detected by the at least two pairs of electrodes 320 is provoked by the at least one acoustic stimulus detected by the at least two microphones 310.

Thus, the detected acoustic stimulus and the respective first parameters are stored 151 in the memory 331 in association with the detected at least one EEG response and the respective second parameters. On the other hand, if at least one predetermined first condition is not satisfied which means that the outcome of the first verifying step 150 is negative, the detected at least one EEG response is not provoked by the at least one acoustic stimulus. In this case, the at least one EEG response and the at least one acoustic stimulus are discarded.

Preferably, the step f) may also comprise to verify if the detected at least one EEG response is detected within a certain timeframe from the detection of the acoustic stimulus.

Preferably, the timeframe is 300 ms from the sound onset time.

More preferably, the timeframe is 120 ms from the sound onset time.

Even more preferably, the timeframe is 60 ms from the sound onset time.

If at least one predetermined second condition is not satisfied which means that the outcome of the second verifying step 160 is negative, the processing and control unit 330 determines the modified amplification curve to be applied to the hearing aid 400.

On the other hand, if at least one predetermined second condition is satisfied which means that the outcome of the second verifying step 160 is positive, the user amplification curve does not need to be modified. It means that the user's acuity to sounds is not affected or diminished.

Preferably, the method 100 comprises, after the step d) and before the step e) the step:
d1) applying 141 a frequency domain filtering to the detected at least one EEG response.

The application 141 of the frequency domain filtering permits to isolate only the relevant part of the detected at least one EEG responses, removing frequencies that do not carry information about brain activity related to acoustic stimuli.

The frequency domain filter can be realized for example using a band-pass Butterworth filter of order 4 with a lower and upper cutoff frequency of 0.5 Hz and 100 Hz, respectively.

Preferably, the method 100 comprises, after the step d) and before the step e) the step:
d2) applying 142 a non-linear preprocessing to the detected at least one EEG response to reduce spurious responses.

The non-linear preprocessing is applied by know technique such as for example blind source separation or ICA (Independent Component Analysis).

Preferably, the method 100 comprises, after the step d) and before the step e) the step:
d3) re-referencing 143 the detected at least one EEG response.

The re-referencing 143 is applied by combining or averaging by linear operations the channels of the at least two pairs of electrodes 320 used for the detection of the EEG response.

In the present description, the expression "re-referencing" means the process of changing the reference of the channels of the detected EEG responses.

The reference electrodes used for the detection of the EEG responses are usually termed the 'common' reference electrodes for the responses if all the channels use this same reference.

There is no best site where the "common" reference electrodes can be placed. It could be possible that non-scalp channel references (earlobes, nose) introduce more noise than a scalp channel reference.

If the EEG responses have been detected with a given reference, they can usually be re-referenced to any other reference channel or channels combination.

It could be possible to convert EEG responses from fixed or "common" reference (for example, from a common earlobe or other channel reference) to an 'average reference', which is the average of the different channels of the detected EEG responses.

Preferably, the predetermined first conditions are one or more conditions among:

- the direction of arrival of a respective acoustic stimulus detected by a respective microphone 310 is within a first preset range and the related power of the cross-correlations of the EEG responses of the at least two pairs of electrodes 320 is within a second preset range;
- the intensity of a respective acoustic stimulus detected by a respective microphone 310 is above a first preset threshold and the related signal amplitude of a respective EEG response detected by a respective pair of electrode 320 is above a second preset threshold;
- the power of the EEG response detected by one respective pair of electrode 320 is in the second predetermined frequency range and the related power of the acoustic stimulus detected by one respective microphone 310 is in the first predetermined frequency range;

- the signal amplitude of EEG responses detected by the respective pair of electrode 320 is above a third preset threshold with the at least two microphones 310 arranged at the first predetermined distance.

Preferably, the first preset range is an angular range. Preferably, the predetermined second conditions comprises one or more conditions among:

- at least one of the first parameters is within/above a third preset range and at least one of the second parameters is within/above a fourth preset range, said third preset range and said fourth preset range being based on literature or historical values.

Literature values are values known in the state of art.

Historical values are values previously collected for example during an initial clinic visit.

Preferably, the historical values correspond to the previously determined parameter values.

For example, the second conditions comprise that the first predetermined time subsequent the sound onset time is within the third preset range and the related signal amplitude of the EEG response detected by a respective pair of electrode 320 is above the fourth preset range. In this case, the third preset range can be 300 ms and the fourth preset range can be $10\mu V$.

For example, the second conditions comprise the following condition:

- the power of the EEG response detected by one respective pair of electrode 320 is above the third preset range in the second predetermined frequency range. In this case, the third preset range can be +3Db or +10Db.

Preferably, the method 100 comprises, after the step f) and before the step g), the step:
f1) filtering 152 each one of the at least one EEG response associated with the respective detected acoustic stimulus on the basis of at least one determined 120 first parameter within/above a fifth preset range and/or at least one determined second parameter 140 within/above a sixth preset range.

For example, detected acoustic stimuli with the direction of arrival above the fifth preset range (and the associated EEG responses) may be discarded.

For example, detected acoustic stimuli with the direction of arrival above the fifth preset range and/or signal amplitude differences of EEG responses between specific subset of electrodes 320 (such as differences in transient) within a sixth preset range may be discarded.

Preferably, the method 100 comprises, after the step f) and before the step g) the step of:
f2) grouping or discarding 153 similar detected acoustic stimuli and associated detected EEG responses with respect to certain preset criterions.

The preset criterions comprise, for example, aggregating the detected acoustic stimuli and associated EEG responses by estimating the median EEG response with respect to all acoustic stimuli from a certain direction of arrival and/or the intensity of acoustic stimuli above a certain predetermined intensity.

The preset criterions comprise, for example, discarding the detected acoustic stimuli and the associated EEG responses with difference in at least one first parameter and in at least one second parameter, respectively, within a preset discarding threshold.

Preferably, the method 100 comprises, after the step g) and before the step h), the step:

g2) grouping 161 each one of the at least one EEG response associated with the respective detected acoustic stimulus;
and wherein the step h) comprises:

- for each frequency of the amplification curve determining 162 the minimum acoustic intensity of the at least one detected acoustic stimulus associated with a respective detected EEG response of at least a predetermined threshold signal amplitude at said frequency;
- determining 163 a modified gain at said frequency of the modified amplification curve on the basis of the determined 162 minimum acoustic intensity.

In the grouping 161 step, the stored acoustic stimuli and associated EEG responses are compared to each other, respectively, with respect to intensity of the acoustic stimulus and signal amplitude of the EEG response.

The modified gain is determined for each frequency of the amplification curve.

The respective modified gain is determined on the basis of the minimum acoustic intensity selected by the processing and control unit 330 grouped 161.

Preferably, the step a) comprises receiving 131 at least one acoustic stimulus generated by means of the at least two speakers 340.

In this case, the at least one acoustic stimulus comes from the at least two speakers 340.

From the description made, the characteristics of the method for calibrating a hearing aid and the system for calibrating a hearing aid using such a method object of the present invention, are clear, as are the relative advantages.

For example, the method permits to automatically calibrate the hearing aid without the necessity for the user to frequently attend an expensive and specialist visit.

Moreover, after that a certain number of acoustic stimuli-EEG responses pairs are stored, the calibration could be executed by the user command.

It could be also possible to automatically start the calibration periodically by setting the period at which the calibration has to start.

Finally, it is clear that the method for calibrating a hearing aid and the system for calibrating a hearing aid using such a method thus conceived are susceptible of numerous modifications and variations, all of which are within the scope of the invention; moreover, all the details may be replaced by technically equivalent elements. In practice, the materials used, as well as their dimensions, can be of any type according to the technical requirements.

**Claims**

1. Method (100) for calibrating a hearing aid (400) worn by a user wherein said hearing aid (400) is configured to amplify sounds according to an amplification curve that links an amplification gain to an audible frequency range, the method (100) being implemented by a processing and control unit (330) of a system (300) for calibrating the hearing aid (400), the method (100) comprising the steps:

   a) receiving (110) at least one acoustic stimulus detected by means of at least two microphones (310) arranged at a first predetermined distance to each other comprised in said system (300);

   and for each one of the detected acoustic stimulus:

   b) determining (120) at least a first set of parameters of such a detected acoustic stimulus;
   c) receiving (130) at least one EEG response detected by means of at least two pairs of electrodes (320) arranged at a second predetermined distance to each other comprised in said system (300) and at least partially in contact with a user's head;
   d) determining (140) at least a second set of parameters of a respective EEG response;
   e) performing a first verifying step (150) wherein it is verified whether the first set of parameters of the detected acoustic stimulus and the second set of parameters of the detected at least one EEG response satisfy or not at least one of predetermined first conditions;
   f) if the outcome of the first verifying step (150) is positive, storing (151) the detected acoustic stimulus in association with the detected at least one EEG response in a memory (331) of the processing and control unit (330).

2. Method (100) according to claim 1 comprising, after the step f), the steps:

   g) for each one of the at least one EEG response associated with the detected acoustic stimulus, performing a second verifying step (160) wherein it is verified whether the first set of parameters of the detected acoustic stimulus and the second set of parameters of the detected at least one EEG response satisfy or not at least one of predetermined second conditions;
   h) if the outcome of the second verifying step is negative determining (170) a modified amplification curve.

3. Method (100) according to claim 1 or 2, wherein said first set of parameters comprises one or more parameters among the direction of arrival of an acoustic stimulus, intensity of the acoustic stimulus detected by one respective microphone (310) at a first predetermined time, intensity differences of the acoustic stimulus detected by the at least two microphones (310) at the first predetermined time, sound onset time, power of the acoustic stimulus detected by one respective microphone (310) in first a predetermined frequency range, power of the cross-correlations of the acoustic stimulus detected by the at least two microphones (310) in the first predetermined frequency range.

4. Method (100) according to any claims from 1 to 3, wherein said second set of parameters comprises one or more parameters among signal amplitude of the EEG response detected by one respective pair of electrode (320) for a second predetermined time interval subsequent to the sound onset time, power of the EEG response detected by one respective pair of electrode (320) in a second predetermined frequency range, power of the cross-correlations of the EEG responses detected by the at least two pairs of electrodes (320) in the second predetermined frequency range.

5. Method (100) according to claim 4, wherein the predetermined first conditions are one or more conditions among:

   - the direction of arrival of a respective acoustic stimulus detected by a respective microphone (310) is within a first preset range and the related power of the cross-correlations of the EEG responses of the at least two pairs of electrodes is (320) within a second preset range;
   - the intensity of a respective acoustic stimulus detected by a respective microphone (310) is above a first preset threshold and the related signal amplitude of a respective EEG response detected by a respective pair of electrode (320) is above a second preset threshold;
   - the power of the EEG response detected by one respective pair of electrode (320) is in the second predetermined frequency range and the related power of the acoustic stimulus detected by one respective microphone (310) is in the first predetermined frequency range;
- the signal amplitude of EEG responses detected by the respective pair of electrode (320) is above a third preset threshold with the at least two microphones (310) arranged at the first predetermined distance.

**6.** Method (100) according to claim 4 or 5, wherein the predetermined second conditions comprises one or more conditions among:

- at least one of the first parameters is within/above a third preset range and at least one of the second parameters is within/above a fourth preset range, said third preset range and said fourth preset range being based on literature or historical values.

**7.** Method (100) according to any of the preceding claims comprising, after the step d) and before the step e) the step:
d2) applying (142) a non-linear preprocessing to the detected at least one EEG response to reduce spurious responses.

**8.** Method (100) according to any claims from 2 to 7 comprising, after the step f) and before the step g), the step:
f1) filtering (152) each one of the at least one EEG response associated with the respective detected acoustic stimulus on the basis of at least one determined (120) first parameter within/above a fifth preset range and/or at least one determined second parameter (140) within/above a sixth preset range.

**9.** Method (100) according to any claims from 2 to 8 comprising, after the step f) and before the step g) the step:
f2) grouping or discarding (153) similar detected acoustic stimuli and associated detected EEG responses with respect to certain preset criterions.

**10.** Method (100) according to any claims from 2 to 9 comprising, after the step g) and before the step h), the step:

g2) grouping (161) each one of the at least one EEG response associated with the respective detected acoustic stimulus;
and wherein the step h) comprises:

- for each frequency of the amplification curve determining (162) the minimum acoustic intensity of the at least one detected acoustic stimulus associated with a respective detected EEG response of at least a predetermined threshold signal amplitude at said frequency;
- determining (163) a modified gain at said frequency of the modified amplification curve on the basis of the determined (162) minimum acoustic intensity.

**11.** Method (100) according to any of the preceding claims, wherein the step a) comprises receiving (131) at least one acoustic stimulus generated by means of at least two speakers (340) arranged at a third predetermined distance to each other comprised in said system (300).

**12.** System (300) for calibrating a hearing aid (400) configured to amplify sounds according to an amplification curve that links an amplification gain to an audible frequency range, said system (300) comprising:

- at least two microphones (310) intended to be arranged at a first predetermined distance to each other and configured for detecting at least one acoustic stimulus,
- at least two pairs of electrodes (320) intended to be arranged at a second predetermined distance to each other and intended to be at least partially in contact with a user's head, the at least two pairs of electrodes (320) being configured for detecting at least one EEG response,
- a processing and control unit (330) in data communication with the at least two microphones (310) and the at least two pairs of electrodes (320), said processing and control unit (330) comprising a memory (331) for storing data,

said processing and control unit (330) being configured for implementing a method (100) for calibrating the hearing aid (400) when is worn by a user, the method (100) being implemented by the processing and control unit (330), the method (100) comprising the steps:

a) receiving (110) at least one acoustic stimulus detected by means of the at least two microphones (310); and for each one of the detected acoustic stimulus:

b) determining (120) at least a first set of parameters of such a detected acoustic stimulus;
c) receiving (130) at least one EEG response detected by means of the at least two pairs of electrodes (320);
d) determining (140) at least a second set of parameters of a respective EEG response;
e) performing a first verifying step (150) wherein it is verified whether the first set of parameters of the detected acoustic stimulus and the second set of parameters of the detected at least one EEG response satisfy or not at least one of predetermined first conditions;

f) if the outcome of the first verifying step (150) is positive, storing (151) the detected acoustic stimulus in association with the detected at least one EEG response in the memory (331) of the processing and control unit (330).

13. System (300) according to claim 12 comprising at least two speakers (340) intended to be arranged at a third predetermined distance to each other and adapted to generate the at least one acoustic stimulus.

14. Head mountable device (200) comprising a system (300) for calibrating a hearing aid (400) configured to amplify sounds according to an amplification curve that links an amplification gain to an audible frequency range, said system (300) comprising:

- at least two microphones (310) arranged at a first predetermined distance to each other and configured for detecting at least one acoustic stimulus,
- at least two pairs of electrodes (320) arranged at a second predetermined distance to each other and intended to be at least partially in contact with a user's head, the at least two pairs of electrodes (320) being configured for detecting at least one EEG response,
- a processing and control unit (330) in data communication with the at least two microphones (310) and the at least two pairs of electrodes (320), said processing and control unit (330) comprising a memory (331) for storing data,

said processing and control unit (330) being configured for implementing a method (100) for calibrating the hearing aid (400) when is worn by a user, the method (100) being implemented by the processing and control unit (330), the method (100) comprising the steps:
a) receiving (110) at least one acoustic stimulus detected by means of the at least two microphones (310); and for each one of the detected acoustic stimulus:

b) determining (120) at least a first set of parameters of such a detected acoustic stimulus;
c) receiving (130) at least one EEG response detected by means of the at least two pairs of electrodes (320);
d) determining (140) at least a second set of parameters of a respective EEG response;
e) performing a first verifying step (150) wherein it is verified whether the first set of parameters of the detected acoustic stimulus and the second set of parameters of the detected at least one EEG response satisfy or not at least one of predetermined first conditions;
f) if the outcome of the first verifying step (150) is positive, storing (151) the detected acoustic stimulus in association with the detected at least one EEG response in the memory (331) of the processing and control unit (330).

15. Head mountable device (200) according to claim 14 wherein at least one pair of said at least two pairs of electrodes (320) are associated to at least one of two temples (212) of said head mountable device (200).

16. Head mountable device (200) according to claims 14 or 15 wherein at least one pair of said at least two pairs of electrodes (320) are associated to a front (211) of said head mountable device (200).

17. Computer program loadable in the memory of a processing and control unit and comprising instructions that induce the processing and control unit to implement, when the processing and control unit runs the program, a method (100) for calibrating a hearing aid (400) worn by a user wherein said hearing aid (400) is configured to amplify sounds according to an amplification curve that links an amplification gain to an audible frequency range, the method (100) being implemented by a processing and control unit (330) of a system (300) for calibrating the hearing aid (400), the method (100) comprising the steps:

a) receiving (110) at least one acoustic stimulus detected by means of at least two microphones (310) arranged at a first predetermined distance to each other comprised in said system (300);

and for each one of the detected acoustic stimulus:

b) determining (120) at least a first set of parameters of such a detected acoustic stimulus;
c) receiving (130) at least one EEG response detected by means of at least two pairs of electrodes (320) arranged at a second predetermined distance to each other comprised in said system (300) and at least partially in contact with a user's head;
d) determining (140) at least a second set of parameters of a respective EEG response;
e) performing a first verifying step (150) wherein it is verified whether the first set of parameters of the detected acoustic stimulus and the second set of parameters of the detected at least one EEG response satisfy or not at least one of predetermined first conditions;

f) if the outcome of the first verifying step (150) is positive, storing (151) the detected acoustic stimulus in association with the detected at least one EEG response in a memory (331) of the processing and control unit (330).

Fig. 1

Fig. 2

Fig. 3

Fig. 4

Fig. 5

Fig. 6

Fig. 7

Fig. 8

Fig. 9

Europäisches
Patentamt
European
Patent Office
Office européen
des brevets

**EUROPEAN SEARCH REPORT**

Application Number

EP 24 42 5065

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 675 525 A1 (GN HEARING AS [DK] ET AL.) 1 July 2020 (2020-07-01) | 1-14,16, 17 | INV. H04R25/00 |
| Y | * the whole document * | 15 | G02C11/06 |
| A | WO 2023/196328 A1 (META PLATFORMS TECH LLC [US]) 12 October 2023 (2023-10-12) * abstract * * paragraph [0053] - paragraph [0054]; figures 1-2B * | 11,13 | |
| Y | US 2019/182606 A1 (PETERSEN ELINE BORCH [DK] ET AL) 13 June 2019 (2019-06-13) * abstract * * paragraph [0143]; figure 3 * | 15 | |
| A | US 2009/099627 A1 (MOLNAR GREGORY F [US] ET AL) 16 April 2009 (2009-04-16) * abstract * * paragraph [0063]; figures 1A,1B * | 15 | |

TECHNICAL FIELDS
SEARCHED        (IPC)

H04R
G02C

The present search report has been drawn up for all claims

| Place of search | Date of completion of the search | Examiner |
|---|---|---|
| The Hague | 4 June 2025 | Streckfuss, Martin |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
 
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 42 5065

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2025

| Patent document cited in search report | | | Publication date | Patent family member(s) | | | Publication date |
|---|---|---|---|---|---|---|---|
| EP | 3675525 | A1 | 01-07-2020 | CN | 111432317 | A | 17-07-2020 |
| | | | | DK | 3675525 | T3 | 14-08-2023 |
| | | | | EP | 3675525 | A1 | 01-07-2020 |
| | | | | JP | 2020109961 | A | 16-07-2020 |
| WO | 2023196328 | A1 | 12-10-2023 | CN | 119031882 | A | 26-11-2024 |
| | | | | EP | 4504054 | A1 | 12-02-2025 |
| | | | | US | 2023320669 | A1 | 12-10-2023 |
| | | | | WO | 2023196328 | A1 | 12-10-2023 |
| US | 2019182606 | A1 | 13-06-2019 | CN | 110062318 | A | 26-07-2019 |
| | | | | DK | 3499914 | T3 | 14-12-2020 |
| | | | | EP | 3499914 | A1 | 19-06-2019 |
| | | | | US | 2019182606 | A1 | 13-06-2019 |
| US | 2009099627 | A1 | 16-04-2009 | EP | 2211986 | A1 | 04-08-2010 |
| | | | | US | 2009099627 | A1 | 16-04-2009 |
| | | | | US | 2012108998 | A1 | 03-05-2012 |
| | | | | WO | 2009051638 | A1 | 23-04-2009 |

EPO FORM P0459

For more details about this annex : see Official Journal of the European Patent Office, No. 12/82